# EUROPEAN PATENT SPECIFICATION

(11) **EP 2 781 013 B1**
(45) Date of publication and mention of the grant of the patent: **13.01.2016**
(21) Application number: 11784640.2
(22) Date of filing: 15.11.2011
(51) Int. Cl.: H02M 7/72, H02M 1/32, H02M 7/49

(54) **A POWER ELECTRONIC MODULE**
LEISTUNGSELEKTRONIKMODUL
MODULE ÉLECTRONIQUE DE PUISSANCE

(43) Date of publication of application: 24.09.2014
(73) Proprietor: ALSTOM Technology Ltd, 5400 Baden (CH)
(72) Inventor: DAVIDSON, Colin, Charnock, Walton On The Hill Staffordshire ST17 0JZ (GB); TRAINER, David, Reginald, Alvaston Derbyshire DE24 0AQ (GB)
(74) Representative: Ahner, Philippe
(86) International application number: PCT/EP2011/070157
(87) International publication number: WO 2013/071957

(56) References cited:
- WO-A1-2009/115125
- WO-A1-2011/113492

## Description

This invention relates to a power electronic module for use in a chain-link converter of a voltage source converter which provides high voltage direct current (HVDC) power transmission and reactive power compensation.

Voltage source converters are typically used to interconnect electrical networks having different power characteristics such as voltage amplitude and frequency. The design and structure of a power converter depends on the nature of the required power conversion and the power requirements of the connected electrical networks, which may vary greatly depending on the type and size of the intended application.

One example of power conversion is in the field of power transmission. For example, in HVDC power transmission networks, AC electrical power is typically converted to direct current (DC) power for transmission via overhead lines and/or undersea cables. This conversion means that it is not necessary to compensate for AC capacitive or inductive load effects that are otherwise imposed by the transmission line or cable. This in turn reduces the cost per kilometre of the lines and/or cables, and thus conversion of AC power to DC power becomes cost-effective when power needs to be transmitted over a long distance.

AC to DC and DC to AC power conversion is also commonly utilised in power transmission networks in circumstances where it is necessary to interconnect two AC networks operating at different frequencies. Converters are required at each interface between the AC and DC networks to effect the required conversion between the AC and DC networks.

The aforementioned voltage source converters include a plurality of power electronic modules arranged within the chain link converter thereof. Each power electronic module includes a voltage store and/or voltage source which is selectively switchable in and out of the chain-link converter to vary the voltage developed across the chain link converter.

A conventional power electronic module 10, such as is set out in DE 101 03 031, is illustrated schematically in Figure 1. The conventional power electronic module 10 includes first and second Insulated Gate Bipolar Transistors (IGBTs) 12, 14 arranged in a half-bridge arrangement with a DC storage capacitor 16. Each of the IGBTs 12, 14 has associated therewith a respective first and second diode 18, 20.

The conventional power electronic module 10 also requires a crowbar thyristor 22 because the current-handling capability of the IGBTs 12, 14 is poor, and a bypass switch 24 because the IGBTs 12, 14 normally fail to an open circuit mode which is unsafe in a converter including hundreds of such power electronic modules connecting in series and operating at very high voltage.

Such a crowbar thyristor 22, while helping to improve the fault tolerance of the conventional power electronic module 10, requires a heavy and bulky clamping mechanism (not shown) which occupies considerable space.

The need for a bypass switch 24, such as a mechanical or pyrotechnical switch, increases the cost of the module and creates a reliability issue in itself.

Moreover, the IGBTs 12, 14 and their associated diodes 18, 20 have a relatively high on-state voltage and so generate high conduction losses which leads to poor circuit efficiency.

There is, therefore, a need for an improved power electronic module which exhibits high efficiency, provides a safe failure mode, and is tolerant of faults.

According to a first aspect of the invention there is provided a power electronic module, for use in a chain-link converter of a voltage source converter providing high voltage direct current power transmission and reactive power compensation, comprising a first set of series-connected switching elements connected in parallel with an energy storage device, the first set of series-connected switching elements including a first latching switching element and a first non-latching switching element.

Latching switching elements exhibit much lower conduction losses than non-latching switching elements and so the inclusion of a first latching switching element in the first set of series-connected switching elements improves circuit efficiency. They also have a much higher surge current capability and so are more tolerant of faults, and they typically fail to a short-circuit mode which is safer.

Meanwhile the inclusion of a first non-latching switching element provides the option of softening the step changes of voltage or current when operating the module by varying the switching speed of the non-latching switching element. Such softening, i.e. limiting of the rate of change of current and/or the rate of change of voltage improves the reliability of the module and limits the electromagnetic interference generated by the module. It also obviates the need for one or more passive snubber components in the module.

In a preferred embodiment of the invention the first set of series connected switching elements is connected in parallel with the energy storage devices in a half-bridge arrangement having first and second output terminals.

A half-bridge arrangement provides the power electronic module with a desired degree of functionality while reducing the size and cost of an associated voltage source converter by reducing the component count in the power electronic module.

Optionally the first latching switching element is electrically connected between the first and second output terminals.

Arranging the first latching switching element in such a manner means that in real power conversion applications, such as HVDC power transmission, the first latching switching element carries most of the current and its low conduction losses allow for optimisation of the losses generated by the module. In addition, the short-circuit failure mode of the latching switching element obviates the need for a bypass switch.

Moreover, locating the first latching switching element as such results in the first non-latching switching element being located between the second output terminal and the energy storage device. This allows its variable switching speed to be utilised most effectively to soften the step changes of voltage or current.

Preferably the switching element lying between the first and second output terminals is formed using compression packaging. Forming the said switching element in such a manner is advantageous because switching elements constructed with such packaging fail to a safe short circuit and so allow for uninterrupted operation of an associated voltage source converter.

The power electronic module of the invention may further include a second set of series-connected switching elements, the second set of series connected switching elements including a second latching switching element and a second non-latching switching element, and the first and second sets of series-connected switching elements being connected in parallel with the energy storage device in a full-bridge arrangement.

In power transmission applications such as HVDC, the inclusion of a second set of such series-connected switching elements allows the module to provide a degree of DC fault blocking by selectively switching the energy storage device into circuit within the corresponding voltage source converter to establish a voltage to oppose the flow of fault current through the converter.

In addition, a full-bridge arrangement provides useful functionality, such as STATCOM, in reactive power applications.

In a preferred embodiment of the invention each of the first and second latching switching elements is electrically connected to the same terminal of the energy storage device. Electrically connecting the first and second latching switching elements to the same terminal of the energy storage device allows the circuit path created by the first and second latching switching elements to define a bypass path which generates minimal losses and provides a safe short-circuit path. Such a bypass path enables uninterrupted operation of the voltage source converter in the event of a local component or system failure.

Optionally each of the first and second latching switching elements is electrically connected to a negative terminal of the energy storage device. Latching switching elements tend to require much higher gate unit power consumption than non-latching devices and so connecting the latching switching elements in the aforementioned manner simplifies the supply of power to each of the said switching elements.

The or each latching switching element may be or include a thyristor-type semiconductor device.

Preferably the thyristor-type semiconductor device is selected from:
an integrated gate commutated thyristor;
a gate turn off thyristor; and
a gate commutated thyristor.

Such devices operate with low conduction losses, have desirable failure modes, and are tolerant of faults.

The or each non-latching switching element may be or include a transistor-type semiconductor device.

Conveniently the transistor-type semiconductor device is selected from:
an insulated gate bipolar transistor;
a bipolar transistor; and
a field effect transistor.

The switching speed of such devices can be varied and they exhibit inherent current limiting effects.

In another preferred embodiment of the invention the or at least one latching switching element and the or at least one non-latching switching element includes an anti-parallel diode connected in parallel therewith. The inclusion of such anti-parallel diodes allows for the conduction of a fault current by an anti-parallel diode in some power electronic modules and a latching switching element in other power electronic modules within a voltage source converter, and thereby allows the presentation of a bi-directional short circuit, i.e. a crowbar, to an AC network connected to the converter to direct current away from the site of the fault in a DC network.

Optionally the power electronic module of the invention includes a power supply unit electrically coupled to the or each latching switching element, the or each power supply unit being referenced to a negative terminal of the energy storage device. The inclusion of such a power supply unit which is referenced to a negative terminal of the energy storage device avoids the need to supply power to the or each latching switching element through an isolating transformer.

The energy storage device may be one of a capacitor, a fuel cell, a battery, and an auxiliary AC generator with an associated filter.

Such flexibility is useful when power conversion is required in locations where the availability of equipment may vary due to locality and transport difficulties.

Optionally the power electronic module includes a detector arranged in communication therewith to detect an open circuit failure of the or each non-latching switching element. Detecting such an open circuit failure allows switching on of an associated latching switching element to provide a short circuit current path and thereby allow discharge of the energy storage device. The power electronic module 30 is able thereafter to continue to supply power to the latching switching element's gate drive or, alternatively, can provoke an intentional failure of the latching switching element.

According to a second aspect of the invention there is provided a voltage source converter including a plurality of power electronic modules as described hereinabove. The voltage source converter of the invention shares the benefits of the power electronic module of the invention, as set out above.

The voltage source converter may include at least one detector, the or each detector being configured to detect an open circuit failure associated with a respective non-latching switching element and cause the voltage source converter to establish a short circuit path through one or more latching switching elements.

Such an arrangement advantageously allows the voltage source converter to continue operating in the event of a local component or system failure.

There now follows a brief description of preferred embodiments of the invention, by way on nonlimiting example, with reference being made to the accompanying drawings in which:
Figure 1 shows a conventional power electronic module;
Figure 2 shows a power electronic module according to a first embodiment of the invention;
Figure 3 shows a power electronic module according to a second embodiment of the invention; and
Figure 4 shows a voltage source converter according to a further embodiment of the invention.

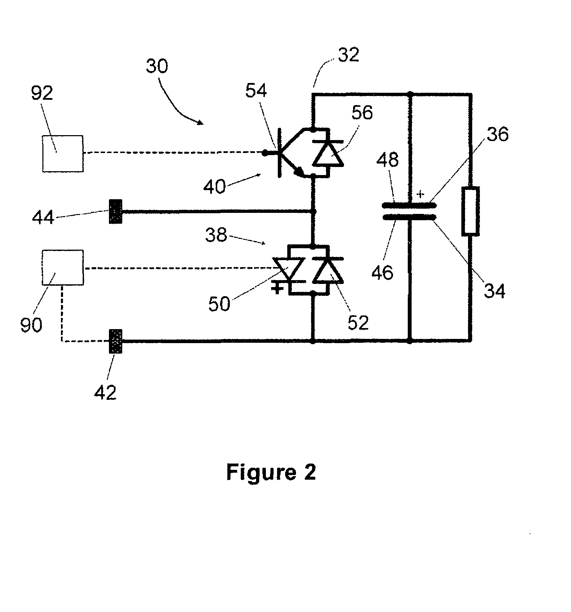

A power electronic module according to a first embodiment of the invention is designated generally by the reference numeral 30, as shown in Figure 2.

The module 30 includes a first set 32 of series-connected switching elements that are connected in parallel with an energy storage device 34 in the form of a capacitor 36.

The first set 32 of series-connected switching elements includes a first latching switching element 38 and a first non-latching switching element 40 that are connected in a half-bridge arrangement with the energy storage device 34.

The half-bridge arrangement has first and second output terminals 42, 44. The first output terminal 42 is electrically connected to a negative terminal 46 of the energy storage device 34 while the second output terminal 44 is electrically connected between the switching elements 38, 40.

In other embodiments of the invention (not shown) the first output terminal 42 may instead be electrically connected to a positive terminal 48 of the energy storage device 34, while the second output terminal 44 is again electrically connected between the switching elements 38, 40.

The first latching switching element 38 is a thyristor-type semiconductor device in the form of a first Integrated Gate Commutated Thyristor (IGCT) 50. The first IGCT 50 has a corresponding first anti-parallel diode 52 connected in parallel therewith.

In other embodiments of the invention the first latching switching element 38 may be a different thyristor-type semiconductor device, such as a gate turn off (GTO) thyristor or a gate commutated thyristor (GCT).

The first non-latching switching element 40 is a transistor-type semiconductor device in the form of a first Insulated Gate Bipolar Transistor (IGBT) 54 with a second anti-parallel diode 56 connected in parallel therewith.

In other embodiments of the invention the first non-latching switching element 40 may be another form of transistor-type semiconductor device in the form of, e.g. a bipolar transistor or a field effect transistor (FET).

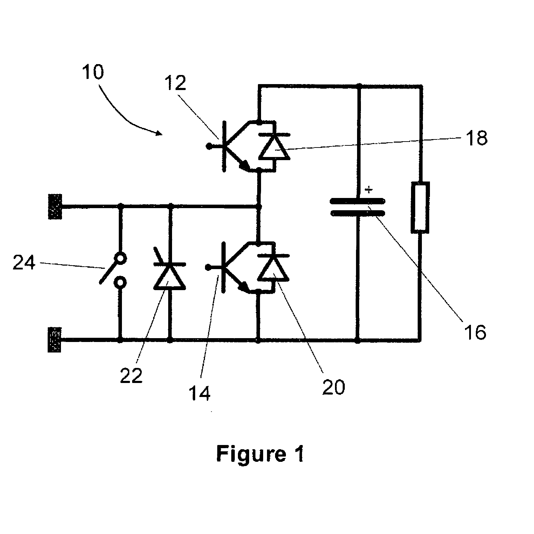

As illustrated in Figure 2, the first power electronic module 30 does not need to include a crowbar thyristor, a bypass switch or a snubber circuit, as is required in the conventional power electronic module 10 illustrated in Figure 1.

The first IGCT 50 is electrically connected between the first and second output terminals 42, 44 which, in the embodiment shown in Figure 2, means that it is electrically connected to the negative terminal 46 of the energy storage device 34. In this manner the first IGCT 50 is able to selectively cause the first module 30 to provide a zero output voltage.

The first IGBT 54 is electrically connected to the positive terminal 48 of the energy storage device 34 and so is able to selectively cause the first module 30 to provide a positive output voltage.

In embodiments of the invention (not shown) in which the first output terminal 42 is electrically connected to the positive terminal 48 of the energy storage device 34 (and the second output terminal 44 is connected between the switching elements 38, 40), the first IGCT 50 is, by virtue of being connected between such first and second output terminals 42, 44, also electrically connected to the positive terminal 48 of the energy storage device 34.

Returning to the embodiment shown in Figure 2, the switching element lying between the first and second output terminals 42, 44, i.e. the first latching switching element 38, is a compression packed switching element.

The first power electronic module 30 also includes a power supply unit 90 that is electrically coupled to the first latching switching element 38 and is referenced to the negative terminal 46 of the energy storage device 34.

In addition the first power electronic module 30 includes a detector 92 that is arranged in communication therewith. The detector 92 is configured to detect an open circuit failure of the non-latching switching element 40.

In use the first power electronic module 30 operates as follows, with particular reference to each of the possible switching, i.e. commutation events, in the half-bridge (as defined by the first set 32 of series-connected switching elements arranged in parallel with the capacitor 36), i.e.: (i) switching ON of the first IGBT 54; (ii) switching OFF of the first IGBT 54; switching ON of the first IGCT 50; and (iv) switching OFF of the first IGCT 50.

### (i) Switching ON of the first IGBT

Switching on of the first IGBT 54, i.e. the first non-latching switching element 40, causes the current flowing in the first anti-parallel diode 52 to fall rapidly to zero.

The first anti-parallel diode 52 can accommodate only a limited rate of change in current, i.e. it has only a limited di/dt capability (e.g. 500A/µs), and so the rate of change of current flowing through the first anti-parallel diode 52 is controlled by slowing down the turn-on of the first IGBT 54. One way in which such a slow down in the turn-on of the first IGBT 54 may be achieved is by including a large gate resistor (not shown) in the gate drive circuit for the first IGBT 54, thereby avoiding the need for a reactive element to limit the current change.

### (ii) Switching OFF of the first IGBT

Turning the first IGBT 54 off causes the current that was flowing into the first IGBT 54 to commutate to the first anti-parallel diode 52.

The first anti-parallel diode 52 is a relatively slow diode which has a high transient forward voltage, and so turn-off of the first IGBT 54 is slowed down to reduce the risk of a voltage overshoot across the first IGBT 54 and a consequential violent discharge of the voltage storage device 34.

### (iii) Switching ON of the first IGCT

Switching on of the first IGCT 50, i.e. the first latching switching element 38, causes the current in the second anti-parallel diode 56 to fall rapidly to zero.

The latching nature of the first IGCT 50 means that its turn-on speed cannot be varied by gate control, and so the second anti-parallel diode 56 associated with the first IGBT 54 is subjected to a very high commutating change in current, i.e. a very high di/dt (e.g. 5000A/µs). Nevertheless, the anti-parallel diodes 56 designed for use with IGBTs inherently have a high di/dt capability and so have no difficulty accommodating this high commutating change in current. In addition the first IGCT 50 has a very high turn-on di/dt capability and so is not damaged by such an event.

### (iv) Switching OFF of the first IGCT

Switching the first IGCT 50 off causes the current that was flowing into the first IGCT 50 to commutate to the second anti-parallel diode 56 and the voltage storage device 34, i.e. capacitor 36.

The second anti-parallel diode 56 is a fast diode which, as set out above, is capable of withstanding the associated high di/dt.

In addition, the loop formed by the voltage storage device 34, the second anti-parallel diode 56, and the first IGCT 50 has a low inductance so that turn-off change in voltage, i.e. dv/dt, and voltage overshoot are limited.

Failure of the first IGCT 50 or its associated first anti-parallel diode 52 will result in a short circuit through the first module 30. If the first IGBT 54 is conducting at the time it may experience such a failure, i.e. such a short circuit, as a sudden increase of current, i.e. a shoot-through. To help counter such an event the first IGBT 54 (or other thyristor-type semiconductor device) may additionally include a shoot-through protector (not shown). Such a protector would rapidly switch off the first IGBT 54 when it detects de-saturation of the first IGBT 54.

A failure of the first IGBT 54 or its associated second anti-parallel diode 56 will result in the current path through the energy storage device 34, i.e. the capacitor 36, becoming open circuit. To help address such a failure the first module 30 includes the detector 92 that is configured to detect the said open circuit and switch on the first IGCT 50 to provide a short circuit current path. Such a step allows discharge of the capacitor 36 and thereafter the first module 30 would continue to supply power to the first IGCT 50 gate drive or, alternatively, would provoke an intentional failure of the first IGCT 50.

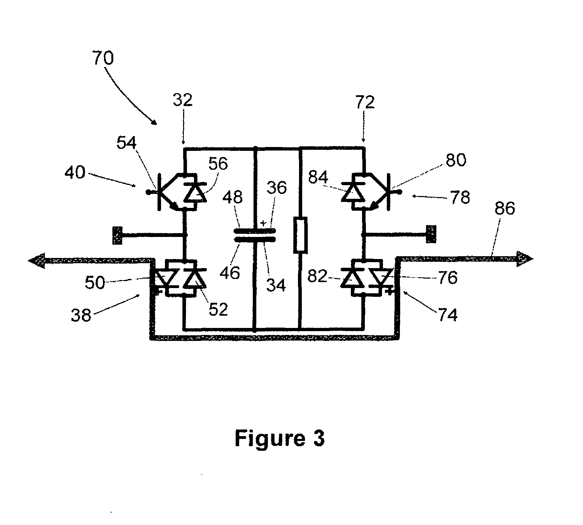

A power electronic module 70 according to a second embodiment of the invention is illustrated schematically in Figure 3. The second module 70 shares a number of features with the first module 30 and these common features are designated by the same reference numerals.

In addition to first latching and non-latching switching elements 38, 40, i.e. a first IGCT 50, a first IGBT 54, and corresponding first and second anti-parallel diodes 52, 56, the second power electronic module 70 includes a second set 72 of series-connected switching elements which is connected in parallel with the energy storage device 34.

The second set 72 of series-connected switching elements includes a second latching switching element 74 in the form of a second IGCT 76, and a second non-latching switching element 78 in the form of a second IGBT 80. The second IGCT 76 includes a third anti-parallel diode 82 connected in parallel therewith and the second IGBT 80 includes a fourth anti-parallel diode 84 connected in parallel therewith.

The first and second sets 32, 72 of series-connected switching elements, i.e. first and second IGCTs 50, 76, first and second IGBTs 54, 80, and associated anti-parallel diodes 52, 56, 82, 84 are connected in parallel with the energy storage device 34 in a full-bridge arrangement.

In particular each of the first and second IGCTs 50, 76 is connected to the same negative terminal 46 of the energy storage device 34 so as to define a bypass path 86 through the second module 70.

Each half of the full-bridge in the second module 70 (as defined by the first and second sets 32, 72 of series-connected switching elements arranged in parallel with the capacitor 36) functions in an essentially analogous manner to the half-bridge described above in connection with the first module 30.

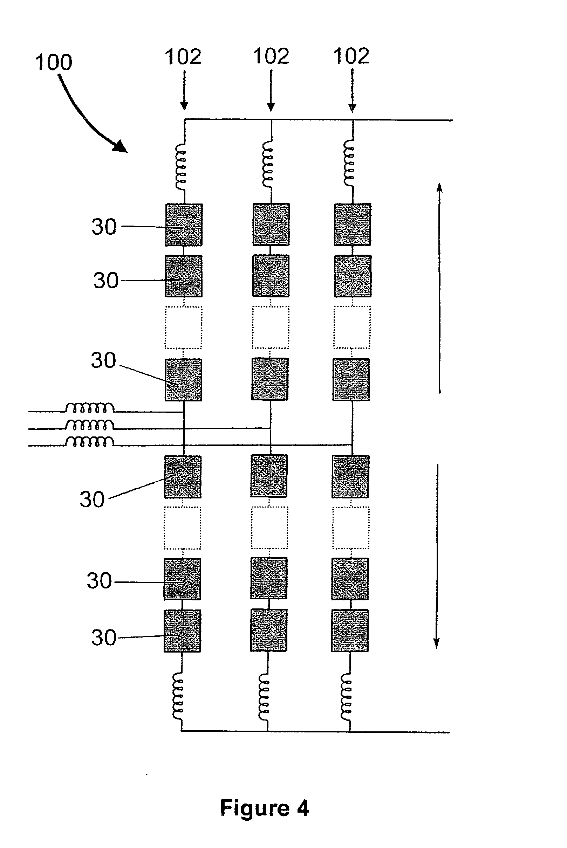

Figure 4 shows a voltage source converter 100 according to an embodiment of the invention.

The voltage source converter 100 is a three-phase converter which includes three limbs 102, each of which corresponds to a respective phase. Each limb 102 includes a plurality of first power electronic modules 30.

In other embodiments of the invention (not shown) the voltage source converter may include fewer than or greater than three limbs. The or each limb may also include one or more first power electronic module 30 and/or one or more second power electronic modules 70.

On detection of an open circuit failure associated with a respective non-latching switching element 40;78 the corresponding detector 92 causes the voltage source converter 100 to establish a short circuit path through one or more latching switching elements 38; 74.

## Claims

1. A power electronic module (30), for use in a chain-link converter of a voltage source converter providing high voltage direct current power transmission and reactive power compensation,
comprising a first set (32) of series-connected switching elements connected in parallel with an energy storage device (34), the first set of series-connected switching elements including a first latching switching element (38) and a first non-latching switching element (40), wherein the first set (32) of series connected switching elements is connected in parallel with the energy storage device (34) in a half-bridge arrangement having first and second output terminals (42, 44) and the first latching switching element (38) is electrically connected between the first and second output terminals (42, 44) and is switched ON and OFF in use of the power electric module;
or comprising :
a first set (32) of series-connected switching elements, including a first latching switching element (38) and a first non-latching switching element (40) and a second set (72) of series-connected switching elements including a second latching switching element (74) and a second non-latching switching element (78), wherein the first and second sets (32, 72) of series-connected switching elements are connected in parallel with an energy storage device (34) in a full bridge arrangement, the first latching switching element (38) and the second latching switching element (74) being switched ON and OFF in use of the power electric module.

2. A power electronic module according to claim 1 wherein the switching element (38) lying between the first and second output terminals (42, 44) is formed using compression packaging.

3. A power electronic module according to Claim 1 wherein each of the first and second latching switching elements (38, 74) is electrically connected to the same terminal of the energy storage device (34).

4. A power electronic module according to Claim 3 wherein each of the first and second latching switching elements (38, 74) is electrically connected to a negative terminal (46) of the energy storage device (34).

5. A power electronic module according to any preceding claim wherein the or each latching switching element (38, 74) is or includes a thyristor-type semiconductor device.

6. A power electronic module according to Claim 5 where the thyristor-type semiconductor device is selected from:
an integrated gate commutated thyristor;
a gate turn off thyristor; and
a gate commutated thyristor.

7. A power electronic module according to any preceding claim wherein the or each non-latching switching element (40, 78) is or includes a transistor-type semiconductor device.

8. A power electronic module according to Claim 7 wherein the transistor-type semiconductor device is selected from:
an insulated gate bipolar transistor;
a bipolar transistor; and
a field effect transistor.

9. A power electronic module according to any preceding claim wherein the or at least one latching switching element (38, 74) and the or at least one non-latching switching element (40, 78) includes an anti-parallel diode (52, 82, 56, 84) connected in parallel therewith.

10. A power electronic module according to any preceding claim including a power supply unit (90) electrically coupled to the or each latching switching element (38), the or each power supply unit being referenced to a negative terminal (46) of the energy storage device (34).

11. A power electronic module according to any preceding claim wherein the energy storage device (34) is one of a capacitor, a fuel cell, a photovoltaic cell, a battery, and an auxiliary AC generator with an associated filter.

12. A power electronic module according to any preceding claim including a detector (92) arranged in communication therewith to detect an open circuit failure of the or each non-latching switching element (40).

13. A voltage source converter including a plurality of power electronic modules (30) according to any of Claims 1 to 12.

14. A voltage source converter according to Claim 13 including at least one detector (92), the or each detector (92) being configured to detect an open circuit failure associated with a respective non-latching switching element (40, 78) and cause the voltage source converter to establish a short circuit path through one or more latching switching elements (38, 74).

## Patentansprüche

1. Leistungselektronikmodul (30) zur Verwendung in einem Kettenverbindungsumrichter eines Spannungsquellenumrichters, welcher Hochspannungsgleichstromübertragung und Blindleistungskompensation bereitstellt,
umfassend eine erste Gruppe (32) von in Reihe geschalteten Schaltelementen, welche parallel zu einem Energiespeichergerät (34) geschaltet sind, wobei die erste Gruppe von in Reihe geschalteten Schaltelementen ein erstes Kippschaltelement (38) und ein erstes Nichtkippschaltelement (40) enthält, wobei die erste Gruppe (32) von in Reihe geschalteten Schaltelementen parallel zu dem Energiespeichergerät (34) in einer Halbbrückenanordnung, welche erste und zweite Ausgabeanschlüsse (42, 44) aufweist, geschaltet ist und das erste Kippschaltelement (38) zwischen dem ersten und dem zweiten Ausgangsanschluss (42, 44) elektrisch angeschlossen ist und bei Verwendung des Leistungselektronikmoduls AN und AUS geschaltet wird;
oder umfassend:
eine erste Gruppe (32) von in Reihe geschalteten Schaltelementen, welche ein erstes Kippschaltelement (38) und ein erstes Nichtkippschaltelement (40) enthält, und eine zweite Gruppe (72) von in Reihe geschalteten Schaltelementen, welche ein zweites Kippschaltelement (74) und ein zweites Nichtkippschaltelement (78) enthält, wobei die erste und die zweite Gruppe (32, 72) von in Reihe geschalteten Schaltelementen parallel zu einem Energiespeichergerät (34) in einer Vollbrückenanordnung geschaltet sind, wobei das erste Kippschaltelement (38) und das zweite Kippschaltelement (74) bei Verwendung des Leistungselektronikmoduls AN und AUS geschaltet werden.

2. Leistungselektronikmodul nach Anspruch 1, wobei das Schaltelement (38), welches zwischen dem ersten und dem zweiten Ausgangsanschluss (42, 44) liegt, mittels Kompressionsverpackens gebildet ist.

3. Leistungselektronikmodul nach Anspruch 1, wobei das erste und das zweite Kippschaltelement (38, 74) an demselben Anschluss des Energiespeichergeräts (34) elektrisch angeschlossen sind.

4. Leistungselektronikmodul nach Anspruch 3, wobei das erste und das zweite Kippschaltelement (38, 74) an einem negativen Anschluss (46) des Energiespeichergeräts (34) elektrisch angeschlossen sind.

5. Leistungselektronikmodul nach einem der vorhergehenden Ansprüche, wobei das oder jedes Kippschaltelement (38, 74) ein thyristorartiges Halbleitergerät ist oder enthält.

6. Leistungselektronikmodul nach Anspruch 5, wobei das thyristorartige Halbleitergerät gewählt ist von:
einem Integrated Gate-Commutated Thyristor;
einem Gate Turn-Off Thyristor; und
einem Gate-Commutated Thyristor.

7. Leistungselektronikmodul nach einem der vorhergehenden Ansprüche, wobei das oder jedes Nichtkippschaltelement (40, 78) ein transistorartiges Halbleitergerät ist oder enthält.

8. Leistungselektronikmodul nach Anspruch 7, wobei das transistorartige Halbleitergerät gewählt ist von:
einem Bipolartransistor mit isoliertem Gate;
einem Bipolartransistor; und
einem Feldeffekttransistor.

9. Leistungselektronikmodul nach einem der vorhergehenden Ansprüche, wobei das oder wenigstens ein Kippschaltelement (38, 74) und das oder wenigstens ein Nichtkippschaltelement (40, 78) eine Antiparallel-Diode (52, 82, 56, 84) enthält, die parallel dazu geschaltet ist.

10. Leistungselektronikmodul nach einem der vorhergehenden Ansprüche, enthaltend eine Energiezuführungseinheit (90), welche mit dem oder jedem Kippschaltelement (38) elektrisch gekoppelt ist, wobei die oder jede Energiezuführungseinheit auf einen negativen Anschluss (46) der Energiespeichereinheit (34) bezogen ist.

11. Leistungselektronikmodul nach einem der vorhergehenden Ansprüche, wobei das Energiespeichergerät (34) ein Kondensator, eine Flusszelle, eine Photovoltaikzelle, eine Batterie oder ein Hilfs-Wechselstrom-Erzeuger mit einem zugeordneten Filter ist.

12. Leistungselektronikmodul nach einem der vorhergehenden Ansprüche, enthaltend einen Detektor (92), der in Kommunikation damit angeordnet ist, um einen Unterbrechungsfehler des oder jedes Nichtkippschaltelements (40) zu erfassen.

13. Spannungsquellenumrichter, enthaltend eine Mehrzahl von Leistungselektronikmodulen (30) nach einem der Ansprüche 1 bis 12.

14. Spannungsquellenumrichter nach Anspruch 13, enthaltend wenigstens einen Detektor (92), wobei der oder jeder Detektor (92) dazu eingerichtet ist, einen Unterbrechungsfehler, welcher zu einem entsprechenden Nichtkippschaltelement (40, 78) gehört, zu erfassen und den Spannungsquellenumrichter dazu zu veranlassen, einen Kurzschlusspfad über ein oder mehr Kippschaltelemente (38, 74) herzustellen.

## Revendications

1. Module électronique de puissance (30), pour son utilisation dans un convertisseur à liaison de chaînes d'un convertisseur de source de tension fournissant une transmission d'énergie à haute tension continue et une compensation de la puissance réactive,
comprenant un premier ensemble (32) d'éléments de commutation connectés en série connecté en parallèle à un dispositif de stockage d'énergie (34), le premier ensemble d'éléments de commutation connectés en série comportant un premier élément de commutation avec verrouillage (38) et un premier élément de commutation sans verrouillage (40), dans lequel le premier ensemble (32) d'éléments de commutation connectés en série est connecté en parallèle au dispositif de stockage d'énergie (34) dans un agencement en demi-pont ayant des première et seconde bornes de sortie (42, 44) et le premier élément de commutation avec verrouillage (38) est électriquement connecté entre les première et seconde bornes de sortie (42, 44) et mis en marche et en arrêt lors de l'utilisation du module électrique de puissance ;
ou comprenant :
un premier ensemble (32) d'éléments de commutation connectés en série, comportant un premier élément de commutation avec verrouillage (38) et un premier élément de commutation sans verrouillage (40) et un second ensemble (72) d'éléments de commutation connectés en série comportant un second élément de commutation avec verrouillage (74) et un second élément de commutation sans verrouillage (78), dans lequel les premier et second ensembles (32, 72) d'éléments de commutation connectés en série sont connectés en parallèle à un dispositif de stockage d'énergie (34) dans un agencement de pont complet, le premier élément de commutation avec verrouillage (38) et le second élément de commutation avec verrouillage (74) étant mis en marche et en arrêt lors de l'utilisation du module électrique de puissance.

2. Module électronique de puissance selon la revendication 1, dans lequel l'élément de commutation (38) situé entre les première et seconde bornes de sortie (42, 44) est formé à l'aide d'une encapsulation par compression.

3. Module électronique de puissance selon la revendication 1, dans lequel chacun des premier et second éléments de commutation avec verrouillage (38, 74) est électriquement connecté à la même borne du dispositif de stockage d'énergie (34).

4. Module électronique de puissance selon la revendication 3, dans lequel chacun des premier et second éléments de commutation avec verrouillage (38, 74) est électriquement connecté à une borne négative (46) du dispositif de stockage d'énergie (34).

5. Module électronique de puissance selon l'une quelconque des revendications précédentes, dans lequel le ou chaque élément de commutation avec verrouillage (38, 74) est ou comporte un dispositif semi-conducteur de type thyristor.

6. Module électronique de puissance selon la revendication 5, dans lequel le dispositif semi-conducteur de type thyristor est sélectionné parmi :
un thyristor commuté à gâchette intégrée ;
un thyristor interrupteur ; et
un thyristor commuté à gâchette.

7. Module électronique de puissance selon l'une quelconque des revendications précédentes, dans lequel le ou chaque élément de commutation sans verrouillage (40, 78) est ou comporte un dispositif semi-conducteur de type transistor.

8. Module électronique de puissance selon la revendication 7, dans lequel le dispositif semi-conducteur de type transistor est sélectionné parmi :
un transistor bipolaire à grille isolée ;
un transistor bipolaire ; et
un transistor à effet de champ.

9. Module électronique de puissance selon l'une quelconque des revendications précédentes, dans lequel le ou le au moins un élément de commutation avec verrouillage (38, 74) et le ou le au moins un élément de commutation sans verrouillage (40, 78) comporte une diode antiparallèle (52, 82, 56, 84) connectée en parallèle aux dits éléments.

10. Module électronique de puissance selon l'une quelconque des revendications précédentes comportant une unité d'alimentation électrique (90) couplée électriquement au ou à chaque élément de commutation avec verrouillage (38), la ou chaque unité d'alimentation électrique ayant une référence à une borne négative (46) du dispositif de stockage d'énergie (34).

11. Module électronique de puissance selon l'une quelconque des revendications précédentes, dans lequel le dispositif de stockage d'énergie (34) est un condensateur ou une pile à combustible ou une cellule photovoltaïque ou une batterie ou un générateur alternatif auxiliaire avec un filtre associé.

12. Module électronique de puissance selon l'une quelconque des revendications précédentes comportant un détecteur (92) agencé en communication avec le module afin de détecter un défaut de circuit ouvert du ou de chaque élément de commutation sans verrouillage (40).

13. Convertisseur de source de tension comportant une pluralité de modules électroniques de puissance (30) selon l'une quelconque des revendications 1 à 12.

14. Convertisseur de source de tension selon la revendication 13 comportant au moins un détecteur (92), le ou chaque détecteur (92) étant configuré pour détecter un défaut de circuit ouvert associé à un élément de commutation sans verrouillage respectif (40, 78) et pour amener le convertisseur de source de tension à établir un chemin de court-circuit par le biais d'un ou de plusieurs éléments de commutation avec verrouillage (38, 74).
